# FASCICULE DE BREVET EUROPEEN

(11) **EP 3 295 365 B1**
(45) Date de publication et mention de la délivrance du brevet: **30.06.2021**
(21) Numéro de dépôt: 16722160.5
(22) Date de dépôt: 09.05.2016
(51) Int. Cl.: G06F 21/83, G06F 21/86, H05K 5/02

(54) **DÉTECTION D'OUVERTURE D'UN DISPOSITIF DE SAISIE DE DONNÉES**
ERKENNUNG DER ÖFFNUNG EINER DATENEINGABEVORRICHTUNG
DETECTION OF OPENING OF A DATA INPUT DEVICE

(30) Priorité: 11.05.2015 FR 1554198
(43) Date de publication de la demande: 21.03.2018
(73) Titulaire: Ingenico Group, 75015 Paris (FR)
(72) Inventeur: BARNERON, Sylvain, 26500 Bourg-les-valence (FR); ROUX, Julien, 69300 Caluire (FR)
(74) Mandataire: Vidon Brevets & Stratégie
(86) Numéro de dépôt international: PCT/EP2016/060319
(87) Numéro de publication internationale: WO 2016/180772

(56) Documents cités:
- EP-A1- 1 432 031
- EP-A1- 2 924 606
- FR-A1- 2 815 733
- US-A1- 2007 062 791
- US-A1- 2011 048 756

## Description

### 1. Domaine de l'invention

L'invention se rapporte au domaine des dispositifs de saisie de données, tels que des terminaux de paiement. L'invention se rapporte plus particulièrement à la sécurisation de tels dispositifs de saisie de données, par exemple par détection d'ouverture ou d'intrusion.

### 2. Art Antérieur

Les terminaux de paiements traitant des données sensibles, il est nécessaire de se protéger contre des tentatives de fraudes. Ainsi, des mesures de protections existent, matérielles et/ou logicielles.

Parmi les mesures de protection matérielles, on trouve notamment les techniques destinées à détecter l'ouverture du capot du terminal de paiement électronique, via par exemple la mise en œuvre de « fausses touches » en élastomère associées à des « pads carbone » ou des « dômes métal », qui permettent de vérifier que le terminal ne subit pas une tentative de démontage.

En effet, un terminal de paiement comprend, de manière classique, une demi-coque supérieure et une demi-coque inférieure. La demi-coque supérieure comprend des ouvertures qui sont utilisées par exemple pour laisser dépasser les touches du clavier et l'écran d'affichage du terminal. Au niveau du clavier, les dispositifs « fausses touches » sont utilisés pour vérifier que la demi-coque supérieure du terminal est bien emboitée d'une part dans la demi-coque inférieure et d'autre part que les fausses touches reposent sur au moins une carte de circuit imprimé (carte mère) présente dans le terminal de paiement. Ceci permet de s'assurer que le terminal de paiement n'est pas ouvert et donc qu'il n'y a pas de tentative d'introduction d'un dispositif espion au niveau du clavier du terminal de paiement par exemple. Les fausses touches sont pressées par exemple par l'intermédiaire d'une extension en plastique (pleine ou non) s'étendant de l'intérieur de la demi-coque supérieure pour venir prendre place sur la fausse touche de la carte de circuit imprimé (carte mère). Cette solution de l'art antérieur est généralement assez efficace. Néanmoins, cette solution est assez ancienne et ne convient pas nécessairement aux nouveaux types de terminaux de paiement.

En effet, il est difficile de créer de telles fausses touches lorsque les touches du clavier sont disposées de manière compacte et serrée car la solution de l'art antérieur nécessite des espaces relativement importants entre les touches afin que des extensions en plastique s'étendant de l'intérieur de la demi-coque supérieure puissent traverser le clavier et venir prendre place sur la fausse touche de la carte mère. Or, dans une optique de réduction de la taille des terminaux de paiement, l'espace disponible pour de telles extensions en plastique n'est pas obligatoirement présent.

Un autre inconvénient tient à la fabrication de l'extension en plastique elle-même, et d'un point de vue plus général, à la fabrication de la demi-coque supérieure. Cette fabrication est problématique tant du point de vue esthétique que du point de vue sécuritaire. Du point de vue esthétique, sur la face externe, visible, de la demi-coque supérieure, la présence des extensions provoque une légère déformation en creux, à l'endroit où se situe cette extension. Ceci est dû au fait que la demi-coque inférieure et la demi-coque supérieure, tout comme la majorité des autres pièces plastiques nécessaires à la fabrication du terminal, sont fabriquées à l'aide d'un procédé d'injection consistant à introduire de la matière plastique chaude sous pression dans un moule. L'injection plastique provoque des déformations à certains endroits des pièces, par exemple au niveau des extensions. Le problème sécuritaire découle de ce problème esthétique. En effet, un attaquant sait précisément où se situent les fausses touches en observant le clavier : les déformations qui sont présentes entre les touches, aux endroits où les extensions en plastiques se prolongent vers les fausses touches disposées sur la carte mère du terminal permettent d'identifier aisément l'emplacement de ces fausses touches et, par voie de conséquence, de renseigner l'attaquant sur les endroits ou ne se situent pas ces fausses touches. L'attaquant peut alors tenter de percer la demi-coque supérieure pour y introduire un dispositif espion.

Enfin, il est aisément possible, pour un attaquant, de coller la fausse touche ainsi que le plastique qui la maintient puis de découper le capot sur lequel elle est en appui. Un attaquant se retrouve donc avec un sous-ensemble constitué du circuit imprimé (par exemple un PCB ou « Printed circuit Board » en anglais), de la fausse touche et d'un bout de capot associé, facile à manipuler. La protection est donc relativement facile à contourner, même si elle fait perdre du temps à l'attaquant et augmente donc les risques qu'il doit prendre

Le document EP 2 924 606 A1 décrit un élément de sécurité d'un dispositif de saisie de données, monté entre deux circuits imprimés de sorte à ce que ses deux extrémités ferment respectivement des contacts sur lesdits deux circuits imprimés dudit dispositif de saisie de données lorsque ledit dispositif de saisie de données est en position fermée, lesdites extrémités n'étant pas électriquement connectées entre elles.

### 3. Résumé

L'invention propose une solution nouvelle qui ne présente pas l'ensemble de ces inconvénients de l'art antérieur, sous la forme d'un élément de sécurité d'un dispositif de saisie de données, l'élément de sécurité présentant une forme adaptée à fermer des contacts via chacune de ses deux extrémités respectivement sur deux circuits imprimés du dispositif de saisie de données lorsque le dispositif de saisie de données est en position fermée, les extrémités n'étant pas électriquement connectées entre elles, ladite forme adaptée correspondant à un cylindre crénelé sur au moins une partie de la hauteur se sa surface externe.

Ainsi, l'invention propose une solution nouvelle et inventive de la sécurisation d'un dispositif de saisie de données, permettant de créer une zone sécuritaire à l'intérieur du dispositif, entre deux circuits imprimés, par l'intermédiaire d'un élément de sécurité unique.

Pour ce faire, l'invention prévoit la mise en œuvre d'une sorte de « fausse touche double face » venant en appui, via chacune de ses extrémités, sur deux circuits imprimés, les deux extrémités de la fausse touche n'étant pas électroniquement reliées entre elles. Ainsi, les deux circuits imprimés se sécurisent mutuellement, via cet élément de sécurité, car s'il est retiré ou détérioré, une intrusion/effraction est détectée, sur l'un ou l'autre des circuits imprimés.

En effet, lorsque le dispositif de saisies de données est en position fermée, chacune des deux extrémités de l'élément de sécurité ferme respectivement un ou plusieurs contacts sur chacun des deux circuits imprimés, de façon à pouvoir détecter une ouverture de ces contacts dès que le dispositif de saisie de données est ouvert. Dans ce cas en effet, l'élément de sécurité n'est plus en contact avec l'un des circuits imprimés, ou les deux, et cette rupture de contacts est détectée par les circuits de détection prévus à cet effet sur chacun des deux circuits imprimés.

Il est à noter que les deux extrémités de l'élément de sécurité ne sont pas électroniquement reliées entre elles et ne permettent donc pas de connecter électriquement les deux circuits imprimés entre eux. Le but recherché n'est en effet pas de détecter une rupture de connexion entre deux circuits imprimés reliés entre eux via un élément tel qu'un zébra, mais bien de détecter l'ouverture du dispositif de saisie de données grâce à un élément de sécurité constituant une « fausse touche double face ».

Ainsi, selon l'invention, l'élément de sécurité présente une forme de cylindre crénelé, particulièrement adaptée pour limiter les pressions respectives sur les deux circuits imprimés.

Selon un aspect particulier de l'invention, l'élément de sécurité présente une excroissance de forme cylindrique à chaque extrémité, les excroissances étant destinées à assurer les contacts avec chacun des circuits imprimés.

Ainsi, selon ce mode de réalisation de l'invention, l'élément de sécurité présente deux excroissances, à chaque extrémité du cylindre, de façon à assurer les contacts avec chacun des deux circuits imprimés.

Il est à noter que ces excroissances peuvent être de taille différente, par exemple selon l'espace disponible sur chacun des deux circuits imprimés.

Selon une caractéristique particulière de l'invention, l'élément de sécurité présente en outre au moins une ailette de positionnement s'étendant latéralement sur une partie de sa hauteur destinée à assurer le positionnement et le maintien de l'élément de sécurité dans au moins un logement prévu sur l'un des deux circuits imprimés.

Ainsi, selon ce mode de réalisation de l'invention, l'élément de sécurité présente également une ailette de positionnement, s'étendant latéralement sur une partie de sa hauteur, et permettant son positionnement dans un logement prévu sur au moins l'un des deux circuits imprimés.

En effet, il est préférable que la position de cet élément de sécurité dans le dispositif de saisies soit évidente au moment du montage du dispositif de saisies, de façon à éviter toute erreur de montage et tout disfonctionnement ultérieur. Ainsi, le logement prévu pour l'élément de sécurité, sur l'un des deux circuits imprimés, prévoit une encoche dans laquelle vient s'insérer l'ailette de l'élément de sécurité, assurant son positionnement et son maintien corrects.

L'invention concerne également un dispositif de saisie de données, comprenant au moins un élément de sécurité tel que décrit précédemment, l'élément de sécurité prenant place entre deux circuits imprimés du dispositif de saisie de données, dans au moins un logement prévu sur un des circuits imprimés, l'élément de sécurité fermant des contacts via chacune de ses deux extrémités respectivement sur les deux circuits imprimés du dispositif de saisie de données lorsque le dispositif de saisie de données est en position fermée.

Un tel dispositif de saisie de données correspond par exemple à un terminal de paiement électronique, et présente l'ensemble des caractéristiques précédemment exposées relativement à l'élément de sécurité.

L'invention concerne aussi un procédé de détection d'une intrusion dans un dispositif de saisie de données tel que décrit précédemment, comprenant une étape de détection d'une intrusion lorsqu'au moins un contact entre une des deux extrémités de l'élément de sécurité et un des deux circuits imprimés est ouvert.

Un tel procédé de détection d'une intrusion est mis en œuvre dans le dispositif de saisie de données, par exemple un terminal de paiement électronique, et présente l'ensemble des caractéristiques précédemment exposées, relativement au dispositif de saisie de données et à l'élément de sécurité.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1 est une vue schématique d'une partie d'un terminal de paiement selon un mode de réalisation de l'invention ;
- la figure 2 illustre un exemple d'un élément de sécurité selon un mode de réalisation de l'invention ;
- les figures 3a et 3 illustrent une partie d'un circuit imprimé d'un terminal de paiement électronique présentant un logement pour un élément de sécurité, respectivement sans et avec un élément de sécurité monté, selon un mode de réalisation de l'invention.

### 5. Description

Le principe général de la technique décrite consiste à sécuriser un dispositif de saisie de données en protégeant deux circuits imprimés du dispositif avec une seule « fausse touche », montée entre les deux circuits imprimés et fermant des contacts sur ses deux extrémités. Une telle « fausse touche » est appelée par la suite « fausse touche double face » ou élément de sécurité.

Ainsi, la solution selon les différents modes de réalisation de l'invention permet de créer une zone sécuritaire entre deux circuits imprimés d'un dispositif de saisie de données, par exemple entre un PCB (ou FPC pour « Flexible Printed Circuit ») et un autre PCB (ou FPC), comprenant chacun un treillis, par l'intermédiaire d'un élément de sécurité monté entre les deux circuits imprimés. Ces deux circuits imprimés se sécurisent l'un et l'autre en quelque sorte, car si on retire la « fausse touche double face », que ce soit d'un côté ou de l'autre (c'est-à-dire sur l'un ou l'autre des circuits imprimés), une effraction sera détectée.

Par exemple, un des deux circuits imprimés correspond à la carte mère, et l'autre peut correspondre à un PCB ou un FPC destiné à protéger une fonction (par exemple un lecteur carte à puce) ou à créer une zone sécuritaire dans laquelle on pourra placer des composants sensibles et/ou faire transiter des informations sensibles.

Par la suite, on décrit plus particulièrement des modes de réalisation dans lesquels le dispositif de saisie de données correspond à un terminal de paiement électronique, mais l'invention s'applique à tout dispositif de saisie de données répondant aux mêmes problématiques de sécurisation.

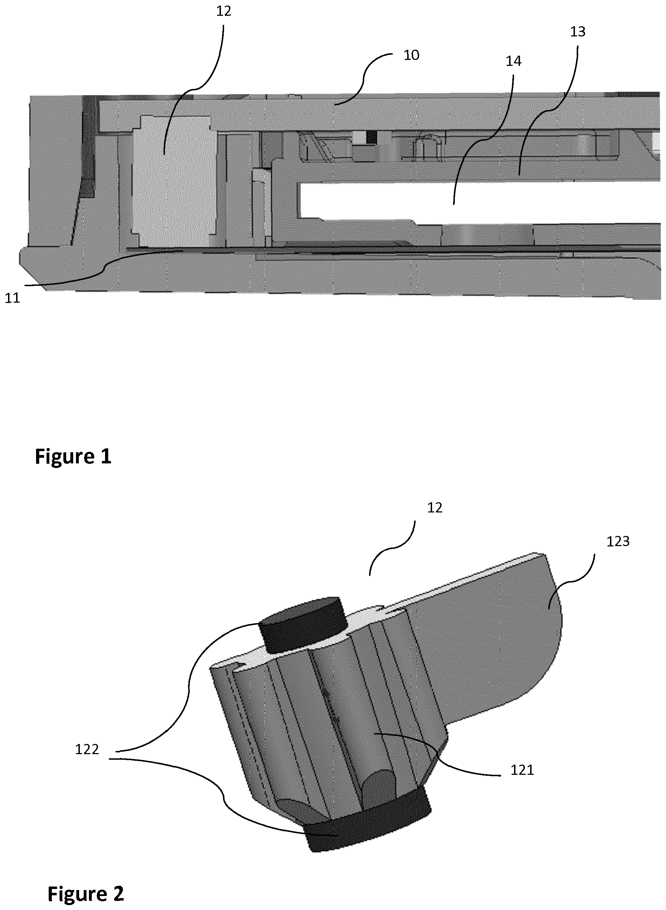

On décrit maintenant, en relation avec la figure 1, un exemple de mise en œuvre de l'invention dans un terminal de paiement électronique présentant notamment un premier circuit imprimé 10 correspondant par exemple à un FPC et un deuxième circuit imprimé 11 correspondant par exemple à la carte mère. Selon ce mode de réalisation, le terminal de paiement électronique présente également un lecteur 13 de carte à puce avec une fente d'insertion 14 pour la carte.

Enfin, un élément de sécurité 12 est monté de façon à entrer en contact, via chacune de ses extrémités, avec les deux circuits imprimés 10 et 11, à des emplacements spécifiques, lorsque le terminal de paiement électronique est en position fermée, pour son utilisation (c'est-à-dire lorsque tous les éléments sont montés et les deux parties du capot refermées).

Selon ce mode de réalisation de l'invention, l'élément de sécurité 12 est monté à l'arrière du lecteur de carte, mais des emplacements différents peuvent être choisis selon l'implantation des autres éléments du terminal de paiement électronique par exemple.

Il est à noter de plus que les deux extrémités de l'élément de sécurité 12 ne sont pas connectées électriquement, de façon à ne pas connecter les deux circuits imprimés lorsque l'élément de sécurité est positionné. En effet, le but recherché par la solution selon les différents modes de réalisation de l'invention n'est pas d'assurer un contact entre deux circuits imprimés via un élément de sécurité (comme par exemple des éléments de sécurisation connus tels que des zébras prévus pour sécuriser une zone par détection de rupture de contact assuré par le zébra lui-même), mais de détecter une effraction/intrusion dans un dispositif de saisie de données grâce à un élément de sécurité agissant de deux côtés pour faire contact avec deux circuits imprimés distincts.

Ainsi, contrairement aux solutions de l'art antérieur, même si un attaquant colle la « fausse touche double face » et son support, il sera obligé de manipuler l'ensemble constitué par la « fausse touche double face », son support ainsi que les deux circuits imprimés. L'enceinte sécuritaire constituée est donc conservée et si l'attaquant veut accéder à cette zone sécurisée et à ses composants, il est obligé d'essayer de court-circuiter le treillis ou les contacts, ce qui nécessite beaucoup plus de temps et augmente considérablement le risque de créer une effraction.

De plus, une seule « fausse touche double face » étant utilisée pour sécuriser deux circuits, l'effort (dû à la compression des fausses touches) engendré sur les capots du dispositif de saisie de données est deux fois plus faible que si deux fausses touches étaient utilisées pour sécuriser respectivement chacun des circuits imprimés. La solution de l'invention, selon ses différents modes de réalisation, n'impacte donc pas la fiabilité du dispositif sécurisé, voire la renforce car on divise par deux le risque d'avoir une des fausses touches fonctionnant mal.

On décrit maintenant plus en détail la structure d'un élément de sécurité 12, en relation avec la figure 2, selon un mode de réalisation de l'invention.

Selon ce mode de réalisation particulier de l'invention illustré en figure 2, l'élément de sécurité 12 présente une forme cylindrique dentelée/crénelée 121, sur presque toute sa hauteur, permettant notamment de réduire la pression sur les circuits imprimés.

En effet, dans ce mode de réalisation, le logement prévu pour la « fausse touche double face » doit présenter un diamètre suffisamment important afin de pouvoir y loger le circuit FPC. Un élément de sécurité correspondant à un simple cylindre occupant tout l'espace dans le logement engendrerait un grand volume de matière à comprimer et donc des efforts importants sur le capot. La forme spécifique du cylindre avec ces nervures permet donc de réduire le volume de matière à comprimer et donc les efforts sur les capots, tout en conservant un bon guidage dans le logement.

De plus, l'élément de sécurité 12 présente une excroissance 122 à chacune de ses extrémités, pour assurer les contacts respectifs avec chacun des deux circuits imprimés. Selon la variante illustrée en figure 2, les deux excroissances présentent des tailles différentes, de façon à s'adapter à la configuration des circuits imprimés, et notamment de la place disponible. Ces excroissances peuvent cependant être identiques. Ce sont ces parties spécifiques de l'élément de sécurité 12, les extrémités 122, qui font pression sur chacun des circuits imprimés lorsque le dispositif de saisie de données est en position fermée, de façon à fermer un ou plusieurs contacts. Par ailleurs, l'ouverture de ce ou ces contacts est détectée par un ou plusieurs circuits de détection de chacun des circuits imprimés dans le cas notamment d'une tentative d'effraction par retrait de la « fausse touche double face » ou éloignement de l'un des deux circuits de l'une des extrémités de cette « fausse touche double face ».

Enfin, selon ce mode de réalisation de l'invention, l'élément de sécurité 12 présente également une sorte d'ailette latérale permettant d'assurer son positionnement correct lors du montage et prévue notamment pour coïncider avec une encoche dans le logement destiné à l'élément de sécurité, sur l'un ou l'autre des circuits imprimés. En effet, du fait de sa forme symétrique, sans cette ailette, l'élément de sécurité 12 pourrait être mal positionné dans le dispositif de saisie de données (c'est-à-dire que son positionnement pourrait être ambigu) et engendrer potentiellement un mauvais fonctionnement. La présence de l'ailette permet de s'affranchir de cet inconvénient en limitant les possibilités de positionnement à une seule possibilité, du fait également de la forme du support/logement présent sur l'un ou l'autre des circuits imprimés.

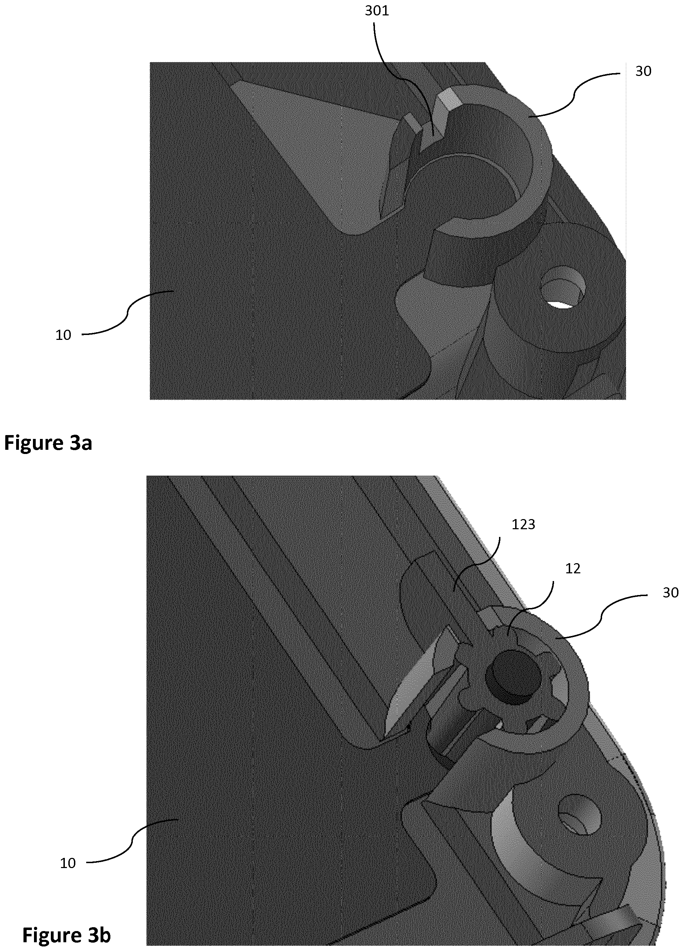

Ce positionnement de l'élément de sécurité 12 est notamment illustré en figure 3b, qui illustre une partie du circuit imprimé présentant un logement prévu pour recevoir l'élément de sécurité.

La figure 3a illustre cette même partie du circuit imprimé 10 (par exemple un FPC ou une carte fille) sans l'élément de sécurité 12. Ce circuit imprimé 10 présente donc un logement 30 de forme cylindrique également, destiné à recevoir l'élément de sécurité 12, et présentant une encoche 301 destinée à recevoir l'ailette 123 de l'élément de sécurité 12, pour un positionnement correct et précis de l'élément de sécurité.

Une fois positionné dans le logement 30 (comme illustré en figure 3b), l'élément de sécurité 12 est maintenu sur le circuit imprimé 10 et peut donc assurer sa fonction de sécurisation du dispositif de saisie de données, lorsque le deuxième circuit imprimé 11 (non illustré sur la figure 3b) est amené en contact, par pression, avec l'autre extrémité de l'élément de sécurité.

Ces différents éléments (élément de sécurité 12, logement 30 dans le circuit imprimé ...) sont associés à un ou plusieurs circuits de détection d'intrusion, basés sur la détection d'ouverture de contact. Le procédé de détection d'une intrusion dans un tel dispositif de saisie de données sécurisé met ainsi en œuvre une étape de détection d'une intrusion lorsqu'un ou plusieurs contacts, entre au moins une des extrémités de l'élément de sécurité 12 et le circuit imprimé, est ouvert. Cette détection est notamment mise en œuvre par le ou les circuits de détection d'intrusion, connus en soi et non décrits ici.

Selon un mode de réalisation de l'invention, les deux extrémités de l'élément de sécurité sont par exemple des pastilles chargées en Carbone et donc conductrices, alors que la partie centrale de forme cylindrique dentelée et l'ailette sont en silicone donc constituent un isolant. Toutes autres matières permettant d'une part de conférer un caractère conducteur aux deux extrémités de l'élément de sécurité et un caractère isolant à sa partie centrale et son ailette peuvent bien sûr être utilisées.

## Revendications

1. Élément de sécurité (12) d'un dispositif de saisie de données, présentant une forme adaptée à fermer des contacts via chacune de ses deux extrémités respectivement sur deux circuits imprimés (10, 11) dudit dispositif de saisie de données lorsque ledit dispositif de saisie de données est en position fermée, lesdites extrémités n'étant pas électriquement connectées entre elles, **caractérisé en ce que** ladite forme adaptée correspond à un cylindre crénelé (121) sur au moins une partie de la hauteur de sa surface externe.

2. Élément de sécurité selon la revendication 1, **caractérisé en ce qu'**il présente une excroissance (122) de forme cylindrique à chaque extrémité, lesdites excroissances étant destinées à assurer les contacts avec chacun des circuits imprimés.

3. Élément de sécurité selon l'une quelconque des revendications 1 et 2, **caractérisé en ce qu'**il présente en outre au moins une ailette de positionnement (123) s'étendant latéralement sur une partie de sa hauteur destinée à assurer le positionnement et le maintien dudit élément de sécurité dans au moins un logement prévu sur l'un des deux circuits imprimés.

4. Dispositif de saisie de données, **caractérisé en ce qu'**il comprend au moins un élément de sécurité selon l'une des revendications 1 à 3, ledit élément de sécurité prenant place entre deux circuits imprimés dudit dispositif de saisie de données, dans au moins un logement prévu sur un desdits circuits imprimés, l'élément de sécurité fermant des contacts via chacune de ses deux extrémités respectivement sur lesdits deux circuits imprimés dudit dispositif de saisie de données lorsque ledit dispositif de saisie de données est en position fermée.

5. Procédé de détection d'une intrusion dans un dispositif de saisie de données selon la revendication 4, **caractérisé en ce qu'**il comprend une étape de détection d'une intrusion lorsqu'au moins un contact entre une des deux extrémités dudit élément de sécurité et un desdits deux circuits imprimés est ouvert.

## Patentansprüche

1. Sicherheitselement (12) einer Dateneingabevorrichtung, das eine Form aufweist, die geeignet ist, Kontakte über jedes ihrer zwei Enden jeweils auf zwei gedruckten Schaltungen (10, 11) der Dateneingabevorrichtung zu schließen, wenn sich die Dateneingabevorrichtung in der geschlossenen Position befindet, wobei die Enden nicht elektrisch miteinander verbunden sind, **dadurch gekennzeichnet, dass** die geeignete Form auf mindestens einem Teil der Höhe ihrer Außenfläche einem krenelieren Zylinder (121) entspricht.

2. Sicherheitselement nach Anspruch 1, **dadurch gekennzeichnet, dass** es an jedem Ende einen Vorsprung (122) von zylindrischer Form aufweist, wobei die Vorsprünge dazu bestimmt sind, die Kontakte mit jeder der gedruckten Schaltungen sicherzustellen.

3. Sicherheitselement nach einem der Ansprüche 1 und 2, **dadurch gekennzeichnet, dass** es ferner mindestens einen Positionierflügel (123) aufweist, der sich seitlich auf einem Teil seiner Höhe erstreckt, der dazu bestimmt ist, das Positionieren und das Halten des Sicherheitselements in mindestens einer Aufnahme sicherzustellen, die auf einer der zwei gedruckten Schaltungen vorgesehen ist.

4. Dateneingabevorrichtung, **dadurch gekennzeichnet, dass** sie mindestens ein Sicherheitselement nach einem der Ansprüche 1 bis 3 aufweist, wobei das Sicherheitselement zwischen zwei gedruckten Schaltungen der Dateneingabevorrichtung in mindestens einer Aufnahme angeordnet ist, die auf einer der gedruckten Schaltungen vorgesehen ist, wobei das Sicherheitselement Kontakte über jedes seiner zwei Enden jeweils an den zwei gedruckten Schaltungen der Dateneingabevorrichtung schließt, wenn sich die Dateneingabevorrichtung in der geschlossenen Position befindet.

5. Verfahren zum Erkennen eines Eindringens in eine Dateneingabevorrichtung nach Anspruch 4, **dadurch gekennzeichnet, dass** es einen Schritt des Erkennens eines Eindringens aufweist, wenn mindestens ein Kontakt zwischen einem der zwei Enden des Sicherheitselements und einer der zwei gedruckten Schaltungen offen ist.

## Claims

1. Security element (12) for a data input device with a shape adapted to closing contacts via each of its two extremities respectively on two printed-circuit boards (10, 11) of the data input device when said data input device is in a closed position, said extremities being not electrically connected to each other, **characterized in that** said adapted shape corresponds to a cylinder (121) that is ridged on at least a part of the height of its external surface.

2. Security element according to claim 1, **characterized in that** it has a cylindrical protrusion (122) at each extremity, said protrusions being intended to provide contacts with each of the printed-circuit boards.

3. Security element according to any one of the claims 1 and 2, **characterized in that** it furthermore has a positioning fin (123) that extends laterally on a part of its height intended to provide for the positioning and holding of the security element in at least one housing provided on one of the two printed-circuit boards.

4. Data input device, **characterized in that** it comprises at least one security element according to any one of the claims 1 to 3, said security element taking position between two printed-circuit boards of said data input device in at least one housing provided on one of said printed-circuit boards, the security element closing contacts via each of its two extremities respectively on said two printed-circuit boards of said data input device when said data input device is in a closed position.

5. Method for detecting an intrusion in a data input device according to claim 4, **characterized in that** it comprises a step for detecting an intrusion when at least one contact between one of the two extremities of said security element and one of said two printed-circuit boards is open.
